# EUROPEAN PATENT APPLICATION

(11) **EP 4 732 676 A1**
(43) Date of publication of application: **29.04.2026**
(21) Application number: 24831645.7
(22) Date of filing: 10.06.2024
(51) Int. Cl.: A23L 2/00, A23L 2/52, C12C 5/02, C12G 3/04

(54) **FATTY ACID-CONTAINING BEVERAGE**

(30) Priority: 26.06.2023 JP 2023104220
(71) Applicant: Suntory Holdings Limited, Osaka-shi, Osaka 530-8203 (JP)
(72) Inventor: NISHIBORI, Tomoyuki, Kawasaki-shi, Kanagawa 211-0067 (JP); MIURA, Yasushi, Kawasaki-shi, Kanagawa 211-0067 (JP); KANDA, Naoto, Soraku-gun, Kyoto 619-0284 (JP); SASANUMA, Yumi, Soraku-gun, Kyoto 619-0284 (JP)
(74) Representative: Vossius & Partner Patentanwälte Rechtsanwälte mbB
(86) International application number: PCT/JP2024/021009
(87) International publication number: WO 2025/004777

(57) **Abstract**

The problem to be addressed by the present invention is to improve the sharpness of a low Brix and low acidity beverage. The present invention uses a specific type of fatty acid in the low Brix and low acidity beverage.

## Description

### Technical Field

The present invention relates to a beverage containing a specific fatty acid and a method related to the beverage.

### Background Art

In the field of beverages, efforts have been made to improve various tastes. Among those tastes, improvement of "sharpness" is also included.

For example, in Patent Document 1, the contents of D-alanine and D-isoleucine are adjusted to improve sharpness of a non-alcoholic beer-taste beverage, and in Patent Document 2, a content of 3-carene is adjusted to 0.01 ppm or more to improve sharpness of an aftertaste of a citrus-flavored beverage.

### Citation List

### Patent Document

Patent Document 1: JP 2021-023191 A
Patent Document 2: JP 2021-016342 A

### Summary of Invention

### Technical Problem

In the present specification, the "sharpness" as the taste of the beverages means that a taste felt when a beverage is taken orally does not remain as an aftertaste and mouthfeel is excellent. Therefore, it is premised that there is a taste at a certain level or higher before the "sharpness" occurs. In other words, the "sharpness" is less likely to occur unless a certain level or more of a component that provides a taste is contained in the beverage.

Although there are various tastes for beverages in recent years, there is a strong need for low-calorie beverages. In addition, there is an increasing need for beverages having a relatively light taste. In order to meet these needs, it is necessary to provide a beverage having a low Brix value and a low acidity. However, such a beverage contains only a small amount of a component that provides a taste at a certain level or higher before the sharpness occurs, and therefore, it is not easy to provide the sharpness of the taste.

Therefore, an object of the present invention is to improve sharpness of a beverage having a low Brix and a low acidity.

### Solution to Problem

As a result of intensive studies, the present inventors have found that a specific type of fatty acid is effective for improving sharpness in a beverage having a low Brix and a low acidity.

That is, the present invention relates, but is not limited, to the following.
[1] A beverage having a Brix value of 2.0 or less, an acidity in terms of citric acid of 0.2 g/100 ml or less, and a total concentration of a fatty acid having 8 or more and 18 or less carbons of 1650 ppb or more.
[2] The beverage according to [1], wherein a total concentration of ethyl ester of a fatty acid having 12 or more and 18 or less carbons is less than 1800 ppb.
[3] The beverage according to [1] or [2], wherein the beverage is a non-alcoholic beverage.
[4] The beverage according to [1] or [2], wherein the beverage is an alcoholic beverage.
[5] The beverage according to any one of [1] to [4], wherein an absorbance at a wavelength of 550 nm is less than 0.68.
[6] A method for improving sharpness in a beverage having a Brix value of 2.0 or less and an acidity in terms of citric acid of 0.2 g/100 ml or less, the method including mixing a raw material so that a total concentration of a fatty acid having 8 or more and 18 or less carbons in the beverage is 1650 ppb or more.

### Advantageous Effects of Invention

The present invention can improve the sharpness of the beverage having a low Brix and a low acidity. This effect is particularly excellent in a low Brix range and a low acidity range.

### Description of Embodiments

A beverage of the present invention and a related method are described below.

Unless otherwise specified, "ppb" used in the present specification means ppb of weight/volume (w/v), and this is synonymous with "µg/L".

In the present specification, the term "alcohol" means ethyl alcohol unless otherwise noted.

### (Beverage)

In one aspect, the beverage of the present invention is a non-alcoholic beverage. The "non-alcoholic beverage" in the present specification means a beverage having an alcohol content of less than 1 v/v%. Examples of the alcohol content in the non-alcoholic beverage are 0.9 v/v% or less, 0.8 v/v% or less, 0.7 v/v% or less, 0.6 v/v% or less, 0.5 v/v% or less, 0.4 v/v% or less, 0.3 v/v% or less, 0.2 v/v% or less, 0.1 v/v% or less, and 0.00 v/v%. As described for confirmation, "0.00 v/v%" also includes a numerical value rounded down to 0.00 v/v% when truncated at the third decimal place, such as 0.001 v/v% or 0.009 v/v%.

In recent years, a demand for non-alcoholic beverages has increased along with an increase in health consciousness among consumers. In the non-alcoholic beverages, since the amount of alcohol that provides a certain taste is small, the problem of insufficient sharpness becomes more serious. Thus, the present invention is particularly useful in the non-alcoholic beverages.

An example of the non-alcoholic beverage is an alcohol-taste beverage having a taste similar to that of an alcoholic beverage. Examples of the alcohol-taste beverage include, but are not limited to, a beer-taste beverage, a highball-taste beverage, a *chuhai*-taste beverage, a non-alcoholic cocktail, a sour-taste beverage, a wine-taste beverage, and a sake-taste beverage. When the highball-taste beverage, the *chuhai*-taste beverage, the non-alcoholic cocktail, and the sour-taste beverage are described in more detail as examples, each of these beverages refers to a non-alcoholic beverage that realizes a taste like, as each model, highball or *chuhai* (in the context of the present invention, the highball or *chuhai* means an alcoholic carbonated beverage obtained by diluting distilled liquor such as whiskey or shochu with another beverage such as water, juice and tea, and may contain fruit juice of fruit such as lemon), a cocktail (in the context of the present invention, the cocktail means a beverage which contains a base liquor such as spirits and liqueur, a sour fruit juice such as citrus fruits, a sweetening ingredient and, if necessary, carbonic acid), or a sour (in the context of the present invention, the sour means a beverage containing a spirit, sour fruit juice such as citrus fruits, a sweetening ingredient, and carbonic acid).

Preferred alcohol-taste beverages are the highball-taste beverage, the *chuhai*-taste beverage, the non-alcoholic cocktail, the sour-taste beverage, the wine-taste beverage, and the sake-taste beverage.

Other examples of the non-alcoholic beverage of the present invention are soft beverages, carbonated beverages, sports drinks, energy drinks, functional beverages, and flavored waters.

In the present specification, the alcohol content of the beverage can be measured by any known method and can be measured, for example, with a vibrating densimeter. Specifically, the alcohol content can be determined by preparing a sample from the beverage by removing carbonic acid gas as necessary through filtration or with ultrasonic waves, distilling the sample with steam, measuring the density of the resulting distillate at 15°C, and converting the density using Table 2 "Conversion Table among Alcohol Content, Density (15°C) and Specific Gravity (15/15°C)" which is annexed to the Official Analysis Method of the National Tax Agency in Japan (National Tax Agency Directive No. 6 in 2007, revised on Jun. 22, 2007). For the measurement of the alcohol content, GC-MS may be used.

In one aspect, the beverage of the present invention is an alcoholic beverage. The "alcoholic beverage" in the present specification means a beverage having an alcohol content of 1 v/v% or more. Examples of the alcohol content in the alcoholic beverage in the present invention are from 1 to 15 v/v%, from 3 to 12 v/v%, and from 4 to 9 v/v%.

Examples of the alcoholic beverage of the present invention are highball, *chuhai,* a cocktail, sour, wine, beer, and sake.

The alcohol may be contained in the alcoholic beverage by any means, and typically, the beverage of the present invention contains distilled liquor, and thus, the beverage of the present invention contains the alcohol. The distilled liquor is not limited by a raw material and a production method of the distilled liquor. Examples of the distilled liquor include spirits (for example, vodka, rum, tequila, gin, aquavit, Korn), alcohol for brewing, neutral spirits, liqueurs, whiskey, brandy, and shochu. In addition, fruits, vegetables, tea, spices, herbs, and the like may be immersed in these distilled liquors, and the resultant may be used.

### (Brix Value)

A Brix value of the beverage of the present invention is low and is 2.0 or less, preferably from 0.01 to 2.0, more preferably from 0.05 to 2.0, and still more preferably from 0.5 to 2.0.

In the present specification, the term "Brix" means a value (g) of a weight of a soluble solid per 100 g of a solution, and the Brix value is usually determined by converting a refractive index measured at 20°C using, for example, a Brix meter or a refractometer, into a mass/mass percent of a sucrose solution based on a conversion table of International Commission for Uniform Methods of Sugar Analysis (ICUMSA). A low Brix value of a beverage indicates a low concentration of soluble solids including carbohydrates.

### (Acidity)

Acidity in the beverage of the present invention is 0.2 g/100 ml or less, preferably from 0.01 to 0.2 g/100 ml, and more preferably from 0.05 to 0.2 g/100 ml, in terms of citric acid.

The "acidity in terms of citric acid" in the present specification refers to a value obtained by converting a total molar concentration of acids in the beverage into an amount of citric acid, assuming that all of the acids are monovalent acids. In the case of a carbonated beverage, the acidity in terms of citric acid means the acidity after degassing. The total molar concentration of the acids in the beverage serving as a sample can be measured by a known method such as titration, and can be calculated, for example, from an addition amount of sodium hydroxide required until the sample becomes neutral (pH 7.0). Specifically, 20 mL of the sample is dispensed into a 100 mL beaker with a whole pipette, distilled water is added to adjust a liquid volume to about 50 mL, and an electrode of a pH meter is inserted into the liquid. Subsequently, a 1/10 N sodium hydroxide solution is added dropwise from a burette while such liquid is stirred, and a point where a scale of the pH meter indicates 7.0 is set as an end point. Then, the total molar concentration of the acids in the sample is determined from an amount of the sodium hydroxide solution required to reach the end point. In addition, taking into account the total molar concentration of the acids obtained, a molecular weight of citric acid (as described for confirmation, citric acid means here free citric acid) and the number of carboxylic acids of citric acid, the acidity in the sample is calculated based on the following formula: acidity = total molar concentration of acids in the sample × (molecular weight of citric acid/number of carboxylic acids of citric acid). An automatic titrator may be used for titration in measuring the acidity.

### (Fatty Acid)

The beverage of the present invention contains a fatty acid having 8 or more and 18 or less carbons. The total concentration of the fatty acid is 1650 ppb or more, preferably from 1700 to 10000 ppb, and more preferably from 2000 to 5000 ppb. When the total concentration of the fatty acid is within the above range, sharpness of a taste of a beverage having a low Brix and a low acidity is improved. As described for confirmation, the beverage may contain only one, two or more, or three or more of fatty acids having 8 or more and 18 or less carbons.

Examples of the fatty acid include saturated fatty acids such as octanoic acid having 8 carbons (caprylic acid), nonanoic acid having 9 carbons (pelargonic acid), decanoic acid having 10 carbons (capric acid), undecanoic acid having 11 carbons (undecylic acid), dodecanoic acid having 12 carbons (lauric acid), tridecanoic acid having 13 carbons (tridecylic acid), tetradecanoic acid having 14 carbons (myristic acid), pentadecanoic acid having 15 carbons (pentadecylic acid), hexadecanoic acid having 16 carbons (palmitic acid), heptadecanoic acid having 17 carbons (margaric acid), and octadecanoic acid having 18 carbons (stearic acid); and unsaturated fatty acids such as 9-hexadecenoic acid (C16: 1/palmitoleic acid).

The beverage of the present invention preferably contains a saturated fatty acid having 8 or more and 18 or less carbons, and preferably contains at least one selected from the group consisting of octanoic acid, decanoic acid, dodecanoic acid, tetradecanoic acid, hexadecanoic acid, and octadecanoic acid.

For the measurement of the total concentration of the fatty acid in the beverage of the present invention, any known method may be used, and for example, GC-MS or LC-MS can be used.

### (Fatty Acid Ethyl Ester)

In one aspect of the beverage of the present invention, the total concentration of ethyl ester of a fatty acid having 12 or more and 18 or less carbons is preferably low. Specifically, the total concentration is preferably less than 1800 ppb, more preferably 1500 ppb or less, and still more preferably 1000 ppb or less.

Examples of the fatty acid included in the ethyl ester of the fatty acid having 12 or more and 18 or less carbons are dodecanoic acid having 12 carbons (lauric acid), tridecanoic acid having 13 carbons (tridecylic acid), tetradecanoic acid having 14 carbons (myristic acid), pentadecanoic acid having 15 carbons (pentadecylic acid), hexadecanoic acid having 16 carbons (palmitic acid), heptadecanoic acid having 17 carbons (margaric acid), and octadecanoic acid having 18 carbons (stearic acid).

For the measurement of the total concentration of the fatty acid ethyl ester in the beverage of the present invention, the method mentioned for the measurement of the concentration of the fatty acid can be used.

### (Absorbance)

None of the fatty acids used in the beverage of the present invention impart a strong color to the beverage. That is, the present invention does not significantly affect color originally possessed by a beverage in which components of the beverage are blended.

For example, if the beverage is inherently colorless or has a light color, the present invention does not significantly change the color of the beverage. Thus, the beverage of the present invention, in one aspect, is colorless or has a light color. This property can be defined by, for example, absorbance at a wavelength of 550 nm measured using an ultraviolet-visible spectrophotometer (for example, UV-1600 (available from Shimadzu Corporation)). Specifically, in this aspect, the absorbance of the beverage of the present invention at a wavelength of 550 nm is less than 0.68. Preferable examples of the absorbance at a wavelength of 550 nm are 0.67 or less, 0.65 or less, 0.63 or less, 0.60 or less, 0.55 or less, 0.50 or less, 0.40 or less, 0.30 or less, 0.20 or less, and 0.10 or less. The lower limit value of the absorbance is not particularly important, and, for example, the absorbance may be 0 or more, 0.01 or more, 0.02 or more, 0.05 or more, 0.07 or more, or 0.10 or more.

### (Carbonic Acid Gas)

The beverage of the present invention may contain carbonic acid gas. The carbonic acid gas can be imparted to the beverage using a method commonly known to those skilled in the art. Examples of such a method may include, but are not limited to: dissolving carbon dioxide in the beverage under pressure; mixing carbon dioxide and the beverage in a pipeline using a mixer, such as a carbonator of Tuchenhagen GmbH; spraying the beverage into a tank filled with carbon dioxide to allow carbon dioxide to be absorbed into the beverage; or mixing the beverage and carbonated water. A carbonic acid gas pressure is adjusted appropriately using these means.

When the beverage of the present invention contains carbonic acid gas, the carbonic acid gas pressure is not particularly limited, but is preferably from 0.7 to 4.5 kgf/cm² and more preferably from 0.8 to 2.8 kgf/cm². In the present invention, the carbonic acid gas pressure can be measured using a gas volume analyzer GVA-500A available from Kyoto Electronics Manufacturing Co., Ltd. For example, temperature of a sample is set to 20°C, and in the gas volume analyzer, after the sample is subjected to degassing (snifting) and shaking is performed, the carbonic acid gas pressure is measured. In the present specification, unless otherwise noted, the carbonic acid gas pressure means a carbonic acid gas pressure at 20°C.

### (Additional Component)

As long as the effects of the present invention are not impaired, to the beverage of the present invention, an additive usually added to beverages can be further blended, such as, for example, a flavoring agent, a vitamin, a coloring agent, an antioxidant, a preservative, a seasoning, extract, a pH adjuster, and a quality stabilizer.

### (Packaged Beverage)

The beverage of the present invention can be provided in a packaged form. Examples of the packaged form include, but are not limited to, a metal container, such as a can; a PET bottle; a paper carton; a bottle; and a beverage pouch. A sterilized packaged product can be produced, for example, through a method in which a container is filled with the beverage of the present invention and then subjected to heat sterilization, such as retort sterilization; or a method in which the beverage is sterilized and filled into a container.

### (Method)

In another aspect, the present invention is a method for improving the sharpness in the beverage having a Brix value of 2.0 or less and an acidity in terms of citric acid of 0.2 g/100 ml or less. The method includes mixing raw materials so that the total concentration of the fatty acid having 8 or more and 18 or less carbons in the beverage is 1650 ppb or more. The raw material includes a material containing a fatty acid and, if necessary, water. Other raw materials are apparent from the above description of the beverage.

The method may include mixing the raw materials so that the Brix value of the beverage is 2.0 or less and the acidity in terms of citric acid is 0.2 g/100 ml or less.

Preferred ranges of the above numerical values are as described above for the beverage. Furthermore, specific examples and amounts of additional other components and parameters are also as described above with respect to the beverage.

### (Numerical Range)

As described for clarification, a numerical range in the present specification includes endpoints of the numerical range, that is, a lower limit value and an upper limit value.

### Examples

Hereinafter, the contents of the present invention will be described in detail with reference to Examples of the present invention; however, the present invention is not limited to the following Examples.

### Test Example 1 Effect of Fatty Acid

First, a beverage as a base was prepared by mixing citric acid for adjusting an acidity and high fructose corn syrup for adjusting Brix with water. The base beverage was also served as a control. Next, saturated fatty acids having from 8 to 18 carbons were added in various amounts to prepare beverages of various Comparative Examples and Examples. Each of the obtained beverages had a Brix of 1.5 and an acidity in terms of citric acid of 0.06 g/100 ml. The types and contents of the fatty acids are as described in the following table ("C8 to C18 fatty acid" used in Comparative Example 7, Examples 7-1 to 7-4 is an equal amount mixture of six types of fatty acids used in the other Examples). All the obtained beverages had an absorbance of less than 0.036 at a wavelength of 550 nm.

A plurality of expert panelists trained on the obtained beverages performed sensory evaluation, and evaluated the effect of improving the sharpness of each beverage sample (a degree of increase in sharpness compared to the control). The evaluation criteria are as follows. Next, an average score was obtained from the obtained evaluation scores. In order to reduce individual differences in the evaluation, the expert panelists had previously established common recognition of a relationship between each evaluation score and taste, using standard samples, each corresponding to each evaluation score.

### <Effect Of Improving Sharpness>

3: Significant increasing effect
2: Increasing effect
1: No increasing effect

In addition, depending on the average score obtained according to the above method, the evaluation was made as ⊚, ○, and the like (Table 1).

### <Average Score And Evaluation>

**[Table 1]**

| | |
|---|---|
| Average score is 2.5 or more | ⊚ |
| Average score is from 2.0 to 2.4 | ○ |
| Average score is from 1.5 to 1.9 | △ |
| Average score is from 1.0 to 1.4 | |

The results of these sensory evaluations are also shown in the following table. The above-mentioned sensory evaluation method was also adopted in other Test Examples.

**[Table 2]**

| | | Control | Comparative Example 1 | Example 1-1 | Example 1-2 | Example 1-3 | Example 1-4 |
|---|---|---|---|---|---|---|---|
| C8 fatty acid (caprylic acid) concentration (ppb) | | 0 | 1640 | 1650 | 2000 | 3000 | 5000 |
| Sharpness | Panel average | 0 | 1.4 | 1.6 | 2.6 | 2.6 | 2.7 |
| | | | | Δ | ⊚ | ⊚ | ⊚ |

| | | Control | Comparative Example 2 | Example 2-1 | Example 2-2 | Example 2-3 | Example 2-4 |
|---|---|---|---|---|---|---|---|
| C10 fatty acid (capric acid) concentration (ppb) | | 0 | 1640 | 1650 | 2000 | 3000 | 5000 |
| Sharpness | Panel average | 0 | 1 | 2 | 2.6 | 2.7 | 2.7 |
| | | | | ○ | ⊚ | ⊚ | ⊚ |

| | | Control | Comparative Example 3 | Example 3-1 | Example 3-2 | Example 3-3 | Example 3-4 |
|---|---|---|---|---|---|---|---|
| C12 fatty acid (lauric acid) concentration (ppb) | | 0 | 1640 | 1650 | 2000 | 3000 | 5000 |
| Sharpness | Panel average | 0 | 1 | 2 | 2.6 | 2.7 | 2.7 |
| | | | | ○ | ⊚ | ⊚ | ⊚ |

| | | Control | Comparative Example 4 | Example 4-1 | Example 4-2 | Example 4-3 | Example 4-4 |
|---|---|---|---|---|---|---|---|
| C14 fatty acid (myristic acid) concentration (ppb) | | 0 | 1640 | 1650 | 2000 | 3000 | 5000 |
| Sharpness | Panel average | 0 | 1 | 2 | 2.6 | 2.6 | 2.7 |
| | | | | ○ | ⊚ | ⊚ | ⊚ |

| | | Control | Comparative Example 5 | Example 5-1 | Example 5-2 | Example 5-3 | Example 5-4 |
|---|---|---|---|---|---|---|---|
| C16 fatty acid (palmitic acid) concentration (ppb) | | 0 | 1640 | 1650 | 2000 | 3000 | 5000 |
| Sharpness | Panel average | 0 | 1 | 2 | 2.6 | 2.6 | 2.7 |
| | | | | ○ | ⊚ | ⊚ | ⊚ |

| | | Control | Comparative Example 6 | Example 6-1 | Example 6-2 | Example 6-3 | Example 6-4 |
|---|---|---|---|---|---|---|---|
| C18 fatty acid (stearic acid) concentration (ppb) | | 0 | 1640 | 1650 | 2000 | 3000 | 5000 |
| Sharpness | Panel average | 0 | 1 | 2 | 2.7 | 2.7 | 2.8 |
| | | | | ○ | ⊚ | ⊚ | ⊚ |

| | | Control | Comparative Example 7 | Example 7-1 | Example 7-2 | Example 7-3 | Example 7-4 |
|---|---|---|---|---|---|---|---|
| C8 to C18 fatty acid concentration (ppb) | | 0 | 1640 | 1650 | 2000 | 3000 | 5000 |
| Sharpness | Panel average | 0 | 1 | 2 | 2.7 | 2.8 | 2.8 |
| | | | | ○ | ⊚ | ⊚ | ⊚ |

The effect of improving the sharpness was excellent in a specific range of a fatty acid content. This tendency was observed even in a case where a single type of fatty acid was used and a case where a plurality of types of fatty acids were used.

### Test Example 2 Effects of Brix and Acidity

An experiment similar to Test Example 1 was performed except that an equal amount mixture of fatty acids having 8, 10, 12, 14, 16, and 18 carbons was used as fatty acid, the content of the mixture was fixed at 3000 ppb, and the Brix and the acidity were varied. The values of the parameters and the evaluation results are shown in the following table. All the obtained beverages had an absorbance of less than 0.036 at a wavelength of 550 nm.

**[Table 3]**

| | **Acidity fixation** | | | |
|---|---|---|---|---|
| Brix | 0.5 | 1.5 | 2 | 2.1 |
| Acidity (g/100 ml) | 0.06 | | | |
| Sharpness | 2.2 | 2.6 | 1.9 | 0.4 |
| Evaluation | ○ | ⊚ | △ | |

| | **Brix fixation** | | | |
|---|---|---|---|---|
| Acidity (g/100 ml) | 0.01 | 0.06 | 0.2 | 0.3 |
| Brix | 1.5 | | | |
| Sharpness | 2 | 3 | 2 | 1 |
| Evaluation | ○ | ⊚ | Δ | |

| | **Others** | |
|---|---|---|
| Acidity (g/100 ml) | 0.2 | 0.01 |
| Brix | 2 | 0.05 |
| Sharpness | 2 | 2 |
| Evaluation | Δ | Δ |

The effect of improving the sharpness was excellent in a specific Brix range and a specific acidity range.

### Test Example 3 Effect of Type of Component on Brix and Acidity

An experiment similar to Test Example 2 was performed except that the Brix was fixed at 1.5 and the acidity was fixed at 0.06 g/100 ml, high fructose corn syrup (sugar A) or sugar (sugar B) was used for adjusting the Brix, and citric acid (acid A) or phosphoric acid (acid B) was used for adjusting the acidity. The types and evaluation results of the respective components are shown in the following table. All the obtained beverages had an absorbance of less than 0.036 at a wavelength of 550 nm.

**[Table 4]**

| Component | Acid A × sugar A | Acid A × sugar B | Acid B × sugar A | Acid B × sugar B |
|---|---|---|---|---|
| Sharpness | 2.8 | 2.7 | 2.8 | 2.8 |
| Evaluation | ⊚ | ⊚ | ⊚ | ⊚ |

Even when the type of the component that provides the Brix or the acidity was changed, the same tendency as that in the other Test Examples was observed.

### Test Example 4 Effect of Type of Beverage

An experiment similar to Test Example 1 was performed except that an equal amount mixture of fatty acids having 8, 10, 12, 14, 16, and 18 carbons was used as fatty acid, the content of the mixture was fixed at 3000 ppb, and a new base beverage was used.

The new base beverage was obtained by mixing water with a flavoring agent, a non-alcoholic spirits extract, salt, and dextrin. The Brix was adjusted using high fructose corn syrup, and the acidity was adjusted using citric acid. The obtained beverage had a Brix of 1.5 and an acidity in terms of citric acid of 0.06 g/100 ml. The evaluation results are shown in the table below. The obtained beverage had an absorbance of 0.036 at a wavelength of 550 nm.

**[Table 5]**

| | |
|---|---|
| Sharpness | 2.7 |
| Evaluation | ⊚ |

Even when the type of the beverage was changed, the same tendency as that in the other Test Examples was observed.

## Claims

1. A beverage having a Brix value of 2.0 or less, an acidity in terms of citric acid of 0.2 g/100 ml or less, and a total concentration of a fatty acid having 8 or more and 18 or less carbons of 1650 ppb or more.

2. The beverage according to claim 1, wherein a total concentration of ethyl ester of a fatty acid having 12 or more and 18 or less carbons is less than 1800 ppb.

3. The beverage according to claim 1 or 2, wherein the beverage is a non-alcoholic beverage.

4. The beverage according to claim 1 or 2, wherein the beverage is an alcoholic beverage.

5. The beverage according to any one of claims 1 to 4, wherein an absorbance at a wavelength of 550 nm is less than 0.68.

6. A method for improving sharpness in a beverage having a Brix value of 2.0 or less and an acidity in terms of citric acid of 0.2 g/100 ml or less, the method comprising mixing a raw material so that a total concentration of a fatty acid having 8 or more and 18 or less carbons in the beverage is 1650 ppb or more.
